# EUROPÄISCHE PATENTANMELDUNG

(11) **EP 1 832 533 A1**
(43) Veröffentlichungstag der Anmeldung: **12.09.2007**
(21) Anmeldenummer: 07004623.0
(22) Anmeldetag: 07.03.2007
(51) Int. Cl.: B65G 47/84, B65G 47/71

(54) **Förderweiche**

(30) Priorität: 09.03.2006 DE 202006003690 U
(71) Anmelder: KHS AG, 44143 Dortmund (DE)
(72) Erfinder: Backhaus, Martin, 59423 Unna (DE); Mundt, Georg, 59174 Kamen (DE)

(57) **Zusammenfassung**

Vorgestellt wird eine Förderweiche zur Verwendung in Förder- oder Transportsystemen für Behälter (1) oder dergleichen Behälter mit wenigstens drei Anschlüssen zum Zuführen und/oder Abführen der Behälter sowie mit wenigstens einem in einer Transportstrecke für die Behälter zwischen den Anschlüssen vorgesehenen Leit- oder Verteilerelement, über welches die Führung des Behälterstroms zwischen den Anschlüssen mit Weichenfunktion steuerbar ist, wobei vorgesehen ist, dass das Leit- oder Verteilerelement von wenigstens einem umlaufend antreibbaren ersten Transportelement (17) mit Behälteraufnahmen (15,16) gebildet ist, die mit dem Transportelement (17) an mehreren Übergabepositionen (13,14,2c.1,2d.1) vorbeibewegt werden, welche jeweils einem Anschluss zugeordnet sind und über jeweils einen Transportstreckenabschnitt mit dem zugehörigen Anschluss in Verbindung stehen.

## Beschreibung

Die Neuerung bezieht sich auf eine Förderweiche gemäß Oberbegriff Schutzanspruch 1.

In Transportsystemen oder-anlagen zum Transportieren bzw. Fördern von Flaschen oder dergleichen Behältern sind vielfach Förderweichen, d.h. Transport- oder Funktionselemente mit Weichenfunktion erforderlich, um beispielsweise einen angeförderten Behälterstrom in mehrere Einzelströme aufzuteilen und/oder mehrere Behälterströme zu einem einzigen Behälterstrom zusammenzufassen und/oder einen oder mehrere angeförderte Behälterströme gesteuert an einen oder mehrere Auslässe weiterzuleiten usw. Derartige Förderelemente mit Weichenfunktion, die nachstehend auch als Förderweiche bezeichnet werden, werden beispielsweise in Anlagen der Getränkeindustrie zum Transportieren von Flaschen oder ähnlichen Behältern zwischen verschiedenen Behandlungsmaschinen eingesetzt.

Bekannte Förderweichen bestehen im Wesentlichen aus internen Transportstreckenabschnitten, die jeweils einen Anschluss zum Zuführen bzw. Abführen der Behälter bilden, und aus einem von einer Führungsschiene gebildeten Leitelement, welches mit einem Ende stets mit einem internen Transportabschnitt in Verbindung steht und mit seinem anderen Ende gesteuert, beispielsweise durch Schwenken, wahlweise mit einem der weiteren internen Transportstreckenabschnitte verbunden werden kann. Über die Anschlüsse ist eine solche Förderweiche mit äußeren Behälterführungen des Transportsystems verbunden, über die die Behälter zugeführt bzw. abgeführt werden.

Nachteilig ist hierbei u.a., dass in jedem Zustand einer solchen Förderweiche nur jeweils zwei interne Transportstreckenabschnitte über das Leitelement miteinander in Verbindung stehen, der Behälterstrom an den anderen Transportstreckenabschnitten also unterbrochen ist oder unterbrochen werden muss. Dies bedeutet u.a. eine nicht kontinuierliche Förderung der Behälter mit die Förderleistung reduzierenden Stillstandszeiten sowie einen erhöhten Leistungsbedarf für den Antrieb einer Förder- oder Transportanlage wegen des notwendigen Stoppens und Wiederanfahrens des Behältertransportes. Weiterhin besteht bei empfindlichen Behältern, beispielsweise bei aus Kunststoff gefertigten Behältern oder Flaschen die Gefahr einer Beschädigung der Behälter durch Stöße.

Aufgabe der Neuerung ist es, eine Förderweiche aufzuzeigen, die ein gesteuertes Leiten bzw. Umlenken eines oder mehrerer Behälterströme in einem kontinuierlichen Förderverfahren ermöglicht. Zur Lösung dieser Aufgabe ist eine Förderweiche entsprechend dem Schutzanspruch 1 ausgebildet.

Zentrales Element der neuerungsgemäßen Förderweiche, die wegen der vielfältigen Steuerungsmöglichkeiten auch als Kombinationsweiche bezeichnet werden kann, ist das wenigstens eine erste umlaufend angetriebene, das Verteiler- und Leitelement bildende Transportelement. Über dieses Transportelement können die einzelnen Anschlüsse in der jeweils gewünschten Weise gesteuert miteinander in Verbindung gebracht werden, ohne dass eine Unterbrechung der internen Transportstrecke bzw. des kontinuierlichen Behälterstromes erfolgt. Die Behälter werden lediglich in der für die gewünschte Weiterleitung des Behälterstroms entsprechenden Weise in das erste, beispielsweise kontinuierlich umlaufende Transportelement bzw. in die dortigen Behälteraufnahmen eingeleitet bzw. aus diesen Aufnahmen ausgeleitet. Hierdurch ist eine kontinuierliche Arbeitsweise der Förderweiche möglich.

Weiterbildungen der Erfindung sind Gegenstand der Unteransprüche. Die Neuerung wird im Folgenden anhand der Figuren an einem Ausführungsbeispiel näher erläutert. Es zeigen:
- Fig. 1: in Einzeldarstellung ein Behälter in Form einer Flasche;
- Fig. 2: in schematischer Darstellung mit einer Förderweiche gemäß der Neuerung;
- Fig. 3: in schematischer Darstellung verschiedene Betriebszustände der Förderweiche der Figur 2
- Fig. 4: in Draufsicht eine Förderweiche gemäß der Neuerung zur Verwendung in einer Transportstrecke für Behälter gemäß Figur 2;

In den Figuren sind 1 Behälter in Form von Flaschen üblicher Formgebung, beispielsweise Getränkeflaschen. Die vorzugsweise aus Kunststoff gefertigten Behälter 1 besitzen jeweils unterhalb ihrer Behältermündung einen radial überstehenden Mündungs- oder Behälterflansch 1.1, der insbesondere beim Transport der Behälter 1 in einer Behandlungsanlage, d.h. z.B. in einer Anlage zum Füllen, Verschließen und Etikettieren der Behälter 1 zum Führen und Halten des jeweiligen Behälters 1 dient.

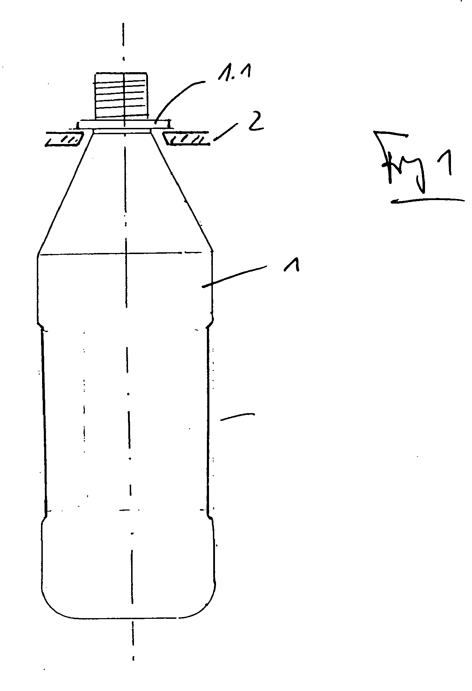

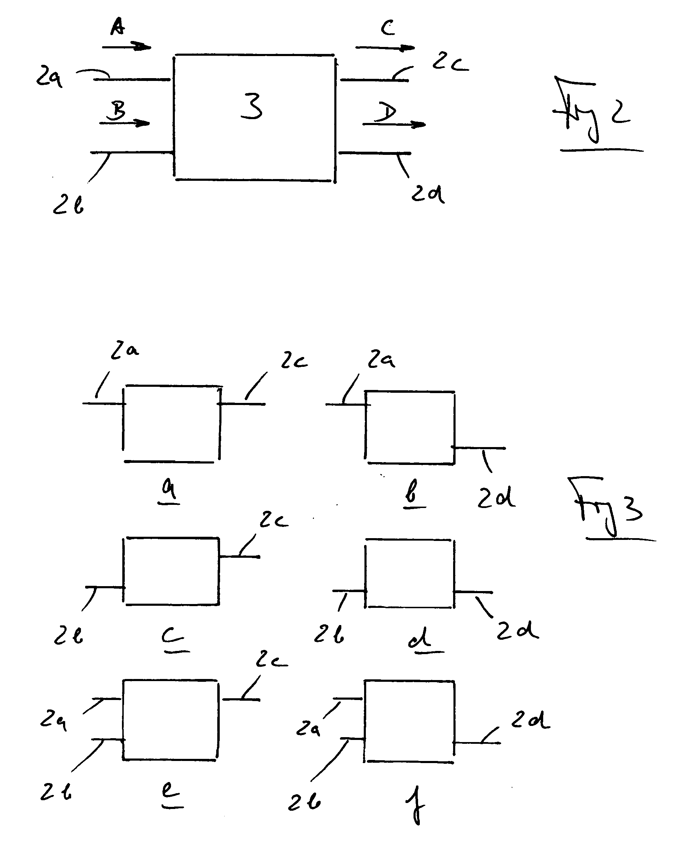

In der Figur 1 ist mit 2 schematisch eine Führung eines Transportsystems angedeutet, an der die Behälter 1 mit ihrem Behälterflansch 1.1 hängend gehalten ist. Die Führung 2 ist Bestandteil eines Transportsystems einer Flaschen- oder Behälterbehandlungsanlage, welches entsprechend der Figur 2 u.a. eine Förderweiche 3 aufweist, an die bei der in der Figur 2 dargestellten Ausführungsform vier der Führung 2 entsprechende Führungen 2a - 2b angeschlossen sind.

Die Behälter 1 werden der Förderweiche 3 über die Führung 2a und/oder 2b jeweils als einspuriger Behälterstrom und an der betreffenden Führung mit dem Behälterflansch 1.1 hängend zugeführt. Je nach Betriebszustand bzw. Ansteuerung der Förderweiche 3 werden die Behälter 1 an die Führung 2c und/oder 2d weitergeleitet, in der die Behälter 1 dann-wiederum an ihrem Behälterflansch 1.1 hängend als einspuriger Flaschenstrom entsprechend den Pfeilen C bzw. D transportiert werden. Das Bewegen der Behälter 1 in den Führungen 2a - 2d erfolgt z.B. durch Förder- bzw. Druckluft. Die Förderrichtung ist jeweils mit den Pfeilen A - D angegeben.

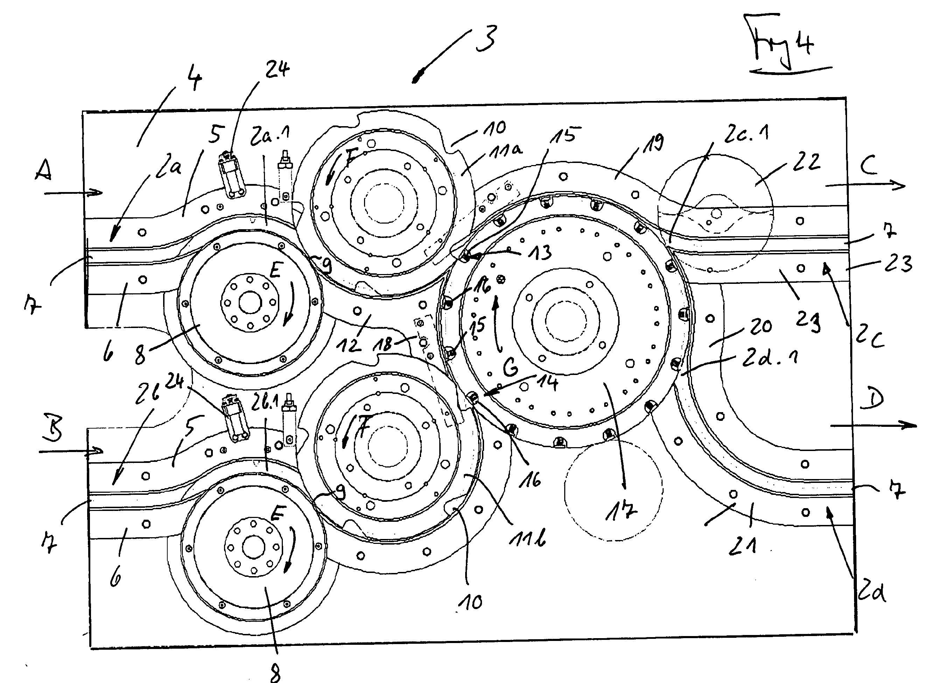

Verschiedene Betriebszustände der Förderweiche 3 sind in der Figur 3 in den dortigen Positionen a - f wiedergegeben, wobei in diesen Positionen jeweils lediglich diejenigen Führungen dargestellt sind, über die der Behälterstrom zugeführt bzw. abgeführt wird.

Die Figur 4 zeigt eine mögliche Ausführungsform der Förderweiche 3 in vereinfachter Darstellung und in Draufsicht. Dargestellt sind in dieser Figur wiederum die Führungen 2a - 2d. Die Führungen 2a und 2b sind im Bereich der Förderweiche 3 von zwei an einem Vorrichtungsgestell 4 befestigten Führungselementen 5 und 6 gebildet, an denen die Behälter 1 mit ihrem Behälterflansch 1.1 hängend gehalten sind und die zur Bildung eines Führungsschlitzes 7 voneinander beabstandet sind. Die Führungen 2a und 2b enden in der Förderweiche 3 jeweils in einem kreisbogenförmig gekrümmten Führungsabschnitt 2a.1 bzw. 2b.1, in dem auch der Führungsschlitz 7 einen kreisbogenförmigen Verlauf aufweist und bezogen auf die vertikale Krümmungsachse außenliegend durch das Führungselement 5 und innenliegend durch den Randbereich einer um die vertikale Krümmungsachse umlaufend angetriebenen Beschleunigungsscheibe 8 begrenzt ist, so dass die Behälter 1 im Bereich des Führungsabschnitts 2a.1 bzw. 2b.1 jeweils mit ihrem Behälterflansch 1.1 an dem Führungselement 5 sowie an dem Rand der betreffenden Beschleunigungsscheibe 8 hängend gehalten sind. Die jeweilige Beschleunigungsscheibe 8 wird gleichsinnig mit der Förderrichtung A bzw. B in Richtung des Pfeils E angetrieben, und zwar mit einer Geschwindigkeit, die etwas größer ist als die Fördergeschwindigkeit, mit der die Behälter 1 über die Führungen 2a und 2b zugeführt werden. Der jeweilige Führungsabschnitt 2a.1 bzw. 2b.1 bildet damit eine Beschleunigungsstrecke, und zwar in der Form, dass die Behälter 1 im Bereich dieses Führungsabschnittes einen dicht gedrängten Behälterstrom bilden.

Jeder Führungsabschnitt 2a bzw. 2b endet an einer Übergabeposition 9, an der sich Aufnahmen 10 vorbeibewegen, die am Umfang eines Zuführrades bzw. einer Zuführscheibe 11a bzw. 11b vorgesehen sind. Jede Zuführscheibe 11a bzw. 11b, die ebenso wie jede Beschleunigungsscheibe 8 für jede Führung 2a und 2b gesondert vorgesehen ist, ist um eine vertikale Achse in Richtung des Pfeils F umlaufend angetrieben, und zwar derart, dass jeder am Ende des Führungsabschnittes 2a.1 bzw. 2b.1 bereitstehende Behälter 1 von der sich an der Übergabeposition 9 vorbeibewegenden Aufnahme 10 erfasst und mit der betreffenden Führungsscheibe 11 a bzw. 11 b mitbewegt wird. Jeder Behälter 1 ist dabei mit seinem Behälterflansch 1.1 in der betreffenden Aufnahme 10 hängend gehalten. Zu zusätzlichen radialen Abstützung und Führung ist entlang der von der jeweiligen Zuführscheibe 11 a bzw. 11 b gebildeten kreisbogenförmigen Transportstrecke ein Führungselement 12 vorgesehen, an welchem sich die Behälter 1 zusätzlich an ihrem Behälterflansch 1.1 abstützen.

Bei der dargestellten Ausführungsform sind die beiden Führungsabschnitte 2a.1 und 2b.1 gleichsinnig gewölbt. Dementsprechend sind auch die beiden Beschleunigungsscheiben 8 gleichsinnig in Richtung des Pfeils E angetrieben, d.h. bei der für die Figur gewählten Darstellung im Uhrzeigersinn. Die beiden Zuführscheiben 11a und 11b sind jeweils so angetrieben, dass an der Übergabeposition 9 die Bewegungsrichtungen der Beschleunigungsscheibe 8 und der Zuführscheibe 11a bzw. 11b identisch sind.

Die an die Führung 2a anschließende und von der in der Figur 4 oberen Zuführscheibe 11a gebildete Transportstrecke endet an einer Übergabeposition 13. Die an die Führung 2b anschließende und von der in der Figur 4 unteren Zuführscheibe 11 b gebildete Transportstrecke endet an einer Übergabeposition 14. An beiden Übergabepositionen 13 und 14 bewegen sich Aufnahmen 15 bzw. 16 vorbei, die in gleichen Winkelabständen am Umfang eines Sammelrades oder einer Sammelscheibe 17 vorgesehen sind, und zwar in Form von zu diesen Umfang hin offenen Ausnehmungen. Die Sammelscheibe 17 ist um eine vertikale Achse in Richtung des Pfeils G angetrieben, und zwar synchron mit den Zuführscheiben 11a und 11 b in der Form, dass sich an jeder Übergabeposition 13 bzw. 14 die Sammelscheibe 17 gleichsinnig und mit gleicher Geschwindigkeit wie die betreffende Zuführscheibe 11a bzw. 11b bewegt. Immer dann, wenn eine Aufnahme 10 der Zuführscheibe 11a die Übergabeposition 13 erreicht, befindet sich dort eine Aufnahme 15. Immer dann, wenn eine Aufnahme 10 der Zuführscheibe 11 b die Übergabeposition 14 erreicht, befindet sich dort eine Aufnahme 16. In Drehrichtung G der Sammelscheibe 17 folgt die Übergabeposition 13 auf die Übergabeposition 14, und zwar um einen Winkelbetrag versetzt, der dem dreifachen Abstand zweier benachbarter Aufnahmen 15 und 16 entspricht. Weiterhin ist die Anordnung so getroffen, dass jede Aufnahme 10 der Sammelscheibe 11a an der Übergabeposition 13 nur auf eine der Aufnahmen 15 und jede Aufnahme 10 der Zuführscheibe 11b an der Übergabeposition 14 nur auf eine Aufnahme 16 trifft. Dadurch, dass jede Aufnahme 10 der Zuführscheibe 11a an der Übergabeposition 13 nur jeweils auf eine Aufnahme 15 der Sammelscheibe 17 und jede Aufnahme 10 der Zuführscheibe 11 b an der Übergabeposition 14 nur jeweils auf eine Aufnahme 16 der Sammelscheibe 17 trifft, ist sichergestellt, dass jede Aufnahme 15 an der Übergabeposition 13 zur Aufnahme eines Behälters 1 frei ist, d.h. nicht bereits an der in Drehrichtung G vorausgehenden Übergabeposition 14 mit einem Behälter 1 besetzt wurde.

Die Sammelscheibe 17 bildet mit ihren Aufnahmen 15 und 16 wiederum zusammen mit äußeren Führungselementen 18, 19 und 20 eine Transportstrecke, an der die Behälter 1 an ihrem Behälterflansch 1.1 hängend bewegt werden. An diese Transportstrecke schließen sich an Übergängen 2c.1 bzw. 2d.1 die Führungen 2c bzw. 2d an. Die Übergänge 2c.1 und 2d.1 sind wiederum in Drehrichtung G der Sammelscheibe 17 um einen Winkelbetrag versetzt vorgesehen, der beispielsweise einem ungeraden ganzzahligen Vielfachen des Abstandes der Aufnahmen 15 und 16 entspricht, d.h. bei der dargestellten Ausführungsform dem dreifachen Abstand dieser Aufnahmen.

Der Übergang 2d.1 ist beispielsweise so ausgebildet, dass jeder Behälter 1, der mit der Sammelscheibe 17 bis an diesen Übergang mitgeführt wurde, zwangsläufig in die Führung 2d gelangt, die innerhalb der Förderweiche 3 von dem Führungselement 20 und dem weiteren Führungselement 21 gebildet ist. Am Übergang 2c ist ein Umlenk- oder Entnahmeelement 22 vorgesehen, mit dem im aktivierten Zustand die in den Aufnahmen 15 oder 16 enthaltenen Behälter 1 in die Führung 2c gesteuert ausgeleitet werden und welches im nicht aktivierten Zustand die in den Aufnahmen 15 und 16 vorhandenen Behälter 1 in diesen Aufnahmen belässt, so dass diese dann über den Übergang 2d.1 an die Führung 2d gelangen. Die Führung 2c ist im Bereich der Förderweiche 3 von einem Abschnitt des Führungselementes 19 sowie von einem weiteren Führungselement 23 gebildet.

Die Förderweiche 3 kann in Förderanlagen und Transportsystemen überall dort Verwendung finden, wo das Zusammenführen und/oder Auseinanderführen von Behälterströmen erforderlich ist. Bei entsprechender Ausbildung insbesondere auch des Sammelrades bzw. der Sammelscheibe 17 ist es weiterhin möglich, die Förderweiche auch so auszubilden, dass mehr als zwei Führungen zum Zuführen von Behältern und/oder mehr als zwei Führungen zum Abführen von Behältern möglich sind.

Mit 24 sind Betätigungselemente an den Führungsabschnitten 2a.1 und 2b.1 bezeichnet, mit denen durch elektrische oder pneumatische Ansteuerung die jeweilige Führung 2a bzw. 2b für die Behälter 1 bzw. für eine Weiterleitung der in dieser Führung vorhandenen Behälter 1 an die Sammelscheibe 17 gesperrt werden kann.

Die Neuerung wurde voranstehend an einem Ausführungsbeispiel beschrieben. Es versteht sich, dass zahlreiche Änderungen sowie Abwandlungen möglich sind.

### Bezugszeichenliste

- 1: Flasche oder Behälter
- 1.1: Mündungs- oder Behälterflansch
- 2, 2a - 2d: Führung
- 2a.1, 2b.1: Führungsabschnitt
- 2c.1, 2d.1: Übergang
- 3: Förderweiche
- 4: Vorrichtungsgestell
- 5, 6: Führungselement
- 7: Führungsschlitz
- 8: Beschleunigungsscheibe
- 9: Übergabeposition
- 10: Aufnahme
- 11, 11 a: Zuführscheibe
- 12: Führungselement
- 13, 14: Übergabeposition
- 15, 16: Aufnahme
- 17: Sammelscheibe
- 18, 19, 20, 21: Führungselement
- 22: Umlenk- oder Ausschleuselemente
- 23: Führungselement
- 24: Sperrelement
- A-D: Förderrichtung
- E, F, G: Drehrichtung

## Patentansprüche

1. Förderweiche zur Verwendung in Förder- oder Transportsystemen für Behälter oder dergleichen Behälter (1), mit wenigstens drei Anschlüssen zum Zuführen und/oder Abführen der Behälter (1) sowie mit wenigstens einem in einer Transportstrecke für die Behälter (1) zwischen den Anschlüssen vorgesehenen Leit- oder Verteilerelement, über welches die Führung des Behälterstroms zwischen den Anschlüssen mit Weichenfunktion steuerbar ist,
**dadurch gekennzeichnet, dass** das Leit- oder Verteilerelement von wenigstens einem umlaufend antreibbaren ersten Transportelement (17) mit Behälteraufnahmen (15, 16) gebildet ist, die mit dem Transportelement(17) an mehreren Übergabepositionen (13, 14; 2c.1, 2d.1) vorbeibewegt werden, welche jeweils einem Anschluss zugeordnet sind und über jeweils einen Transportstreckenabschnitt mit dem zugehörigen Anschluss in Verbindung stehen.

2. Förderweiche nach Anspruch 1, **dadurch gekennzeichnet, dass** die Übergabepositionen (13, 14; 2c.1, 2d.1) in Transportrichtung (G) des wenigstens einen ersten Transportelementes (17) gegeneinander versetzt sind.

3. Förderweiche nach Anspruch 1 oder 2, **dadurch gekennzeichnet, dass** wenigstens ein mit einem Anschluss zum Zuführen der Behälter (1) in Verbindung stehender Transportstreckenabschnitt wenigstens ein zweites, umlaufendes Transportelement (11 a, 11 b) mit Behälteraufnahmen (10) zur Übergabe der Behälter (1) an die Behälteraufnahmen (15,16) des ersten Transportelementes (17) aufweist.

4. Förderweiche nach Anspruch 3, **dadurch gekennzeichnet, dass** wenigstens zwei jeweils mit einem Anschluss in Verbindung stehende Transportstreckenabschnitte mit jeweils wenigstens einem zweiten, umlaufenden Transportelement (11 a, 11 b) vorgesehen sind.

5. Förderweiche nach einem der vorhergehenden Ansprüche, **dadurch gekennzeichnet, dass** der wenigstens eine mit einem Anschluss zum Zuführen der Behälter (1) in Verbindung stehende Transportstreckenabschnitt wenigstens einen als Beschleunigungsstrecke für die Behälter (1) wirkenden Abschnitt (2a.1, 2b.1) besitzt.

6. Förderweiche nach Anspruch 5, **dadurch gekennzeichnet, dass** der als Beschleunigungsstrecke wirkende Abschnitt von einem Abschnitt (2a.1, 2b.1) einer Behälterführung (2a, 2b) mit einem Behälterführungs- oder Tragelement (8) gebildet ist, das in einer Förderrichtung (E) der Behälter (1) umlaufend angetrieben ist.

7. Förderweiche nach Anspruch 6, **dadurch gekennzeichnet, dass** das umlaufend angetriebene Behälterführungs- oder Tragelement eine um eine vertikale Achse angetriebene Beschleunigungsscheibe (8) ist.

8. Förderweiche nach einem der vorhergehenden Ansprüche, **dadurch gekennzeichnet, dass** an den als Beschleunigungsstrecke wirkenden Führungsabschnitt (2a.1, 2b.1) das wenigstens eine zweite Transportelement (11 a, 11 b) anschließt.

9. Förderweiche nach einem der vorhergehenden Ansprüche, **gekennzeichnet durch** wenigstens einen von einer Übergabeposition (2c.1, 2d.1) des wenigstens einen ersten Transportelementes (17) an einen Anschluss zum Abführen der Behälter (1) reichenden und von einer Behälterführung (2c, 2d) gebildeten Transportstreckenabschnitt.

10. Förderweiche nach einem der vorhergehenden Ansprüche, **gekennzeichnet durch** wenigstens einen Anschluss zum Abführen der Behälter (1), der über einen Transportstreckenabschnitt mit einer Übergabeposition (2c.1) des wenigstens eines ersten Transportelementes (17) in Verbindung steht, und dass an der Übergabeposition (2c.1) ein Umlenk- oder Entnahmeelement (22) vorgesehen ist, welches in einem ersten Zustand die mit dem ersten Transportelement (17) an die Übergabeposition (2c.1) geförderten Behälter (1) in den an diese Übergabeposition anschließenden Transportstreckenabschnitt (2c) ausleitet und in einem zweiten Zustand die Behälter (1) in den die Übergabeposition (2c.1) passierenden Behälteraufnahmen (15, 16) belässt.

11. Förderweiche nach Anspruch 10, **dadurch gekennzeichnet, dass** in Förderrichtung (G) des ersten Transportelementes (17) aufeinander folgend wenigstens zwei jeweils einem Anschluss zum Abführen der Behälter (1) zugeordnete Übergabepositionen (2c.1, 2d.1) vorgesehen sind, und dass mit Ausnahme der in Transportrichtung (G) des ersten Transportelementes (17) letzten Übergabeposition (2d.1) an jeder Übergabeposition (2c.1) ein Umlenk- oder Ausschleuselement (22) vorgesehen ist.

12. Förderweiche nach einem der vorhergehenden Ansprüche, **dadurch gekennzeichnet, dass** das wenigstens eine erste Transportelement (17) eine um eine vertikale Achse umlaufend antreibbare Schreibe oder ein um eine vertikale Achse antreibbares Rad mit am Umfang vorgesehenen Behälteraufnahmen (15, 16) ist.

13. Förderweiche nach einem der vorhergehenden Ansprüche, **dadurch gekennzeichnet, dass** das wenigstens eine zweite Transportelement (11 a, 11 b) ein am Umfang mit dem Behälteraufnahmen (10) ausgebildetes und um eine vertikale Achse umlaufend antreibbares Rad oder eine um die vertikale Achse antreibbare Scheibe ist.

14. Förderweiche nach einem der vorhergehenden Ansprüche, **dadurch gekennzeichnet, dass** das wenigstens eine zweite Transportelement (11 a, 11 b) ein Zuführungsrad oder eine Zuführungsscheibe (11) mit am Umfang ausgebildeten Aufnahmen (10) ist.

15. Förderweiche nach einem der vorhergehenden Ansprüche, **gekennzeichnet durch** wenigstens zwei Anschlüsse zum Zuführen der Behälter (1) und mit wenigstens zwei, diesen Anschlüssen zugeordneten, in Transportrichtung (G) des wenigstens einen ersten Transportelementes (17) gegeneinander versetzten Übergabepositionen (13, 14).

16. Förderweiche nach Anspruch 15, **dadurch gekennzeichnet, dass** Behälteraufnahmen (15,16) am ersten Transportelement (17) Gruppen von Behälteraufnahmen bilden, dass die Anzahl dieser Gruppen gleich der Anzahl der Anschlüsse zum Zuführen der Behälter (1) ist, und dass die Behälteraufnahmen (15, 16) derart am ersten Transportelement (17) verteilt vorgesehen sind, dass an jeder einem Anschluss zum Zuführen der Behälter (1) zugeordneten Übergabeposition (13, 14) nur Behälter (1) dieses Anschlusses in die diesem Anschluss zugeordnete Gruppe von Behälteraufnahmen (15, 16) übergeben werden.

17. Förderweiche nach einem der vorhergehenden Ansprüche, **dadurch gekennzeichnet, dass** das wenigstens eine erste Transportelement (17) und/oder dessen Aufnahmen (15, 16) für eine Halterung und/oder Führung der Behälter (1) an einem Behälterflansch (1.1) ausgebildet sind.

18. Förderweiche nach einem der vorhergehenden Ansprüche, **dadurch gekennzeichnet, dass** die die Anschlüsse mit dem wenigstens einen ersten Transportelement (17) bzw. mit den dortigen Übergabepositionen verbindenden Transportstreckenabschnitte für eine Halterung und/oder Führung der Behälter (1) an einem Behälterflansch (1.1) ausgebildet sind.

19. Förderweiche nach einem der vorhergehenden Ansprüche, **gekennzeichnet durch** Mittel (24) zum gesteuerten Sperren wenigstens eines Transportstreckenabschnitts (2a.1, 2b.1).
